# FASCICULE DE BREVET EUROPEEN

(11) **EP 0 354 119 B1**
(45) Date de publication et mention de la délivrance du brevet: **12.01.1994**
(21) Numéro de dépôt: 89402189.8
(22) Date de dépôt: 02.08.1989
(51) Int. Cl.: H04L 12/56

(54) **Commutateur de paquets pour un transfert de données en mode asynchrone dans un réseau de transmission numérique**
Paketvermittlung zur asynchronen Datenübertragung in einem digitalen Übertragungsnetz
Packet switch for asynchronously transmitting data in a digital transmission network

(30) Priorité: 05.08.1988 FR 8810612
(43) Date de publication de la demande: 07.02.1990
(73) Titulaire: LMT RADIO PROFESSIONNELLE, 92103 Boulogne-Billancourt (FR)
(72) Inventeur: Lagoutte, Pierre, F-92045 Paris la Défense (FR)
(74) Mandataire: Lincot, Georges

(56) Documents cités:
- EP-A- 0 113 639
- EP-A- 0 126 196

## Description

L'invention se rapporte au domaine des télécommunications et plus particulièrement à un commutateur de paquets pour un transfert de données en mode asynchrone dans un réseau de transmission numérique, utilisable notamment dans un réseau à intégration de services destiné à transmettre des données d'origines différentes à des débits pouvant être largement différents, les différents services pouvant utiliser des débits de données variant dans une grande plage, "broadband ISDN" dans la terminologie anglo-saxonne.

Dans l'option actuellement retenue pour le transfert des données dans de tels réseaux, le transfert s'effectuera en mode asynchrone, les données étant transmises dans des cellules de longueur fixe comportant un en-tête, et une charge utile. Les commutateurs connus tels que décrits par exemple dans la demande de brevet EP-A-0 113 639 ne permettent pas d'absorber des débits largement différents, qui fonctionneraient en mode asynchrone.

L'invention a donc pour objet un commutateur rapide de paquets adapté au transfert de données en mode asynchrone, qui soit sans blocage, susceptible d'absorber tous les débits des artères entrantes et donc adapté à un grand nombre de communications.

Selon l'invention, un commutateur de paquets pour un transfert de données en mode asynchrone dans un réseau de transmission numérique, destiné à interconnecter des voies appartenant à N artères entrantes dans le commutateur à des voies appartenant à N artères sortantes du commutateur, caractérisé en ce qu'il est structuré autour d'un bus de transfert de données multiplexées unique absorbant la totalité du débit, et comporte :
d'une part en amont du bus de transfert :
- un circuit adaptateur d'entrée réalisé en technologie rapide, relié aux artères entrantes, qui transforme les données série des artères entrantes en données parallélisées en paquets de n bits,
- N piles mémoire à décalage d'entrée associées aux artères d'entrée réalisées en technologie à vitesse modérée et dont les entrées parallèles sont reliées aux sorties correspondantes du circuit adaptateur d'entrée et dont les sorties transfèrent les données mémorisées par paquets de nM bits sur le bus unique à nM bits via un circuit multiplexeur ;
   et en aval du bus :
- N piles mémoires à décalage, réalisées en technologie à vitesse modérée reliées au bus, ayant chacune une sortie parallèle sur n bits,
- et un circuit adaptateur de sortie réalisé en technologie rapide, relié aux sorties des piles mémoires et transférant les données sérialisées sur les artères sortantes.
et d'autre part :
en ce qu'il comporte un traducteur, effectuant une traduction centralisée à commande par l'amont, couplé à la sortie du multiplexeur sur le bus de transfert pour prélever les bits associés aux identificateurs de voies logiques entrantes et les traduire en identificateurs de voies logiques, la sortie correspondante du traducteur étant également reliée aux entrées des N piles mémoires de sortie, une mémoire pipeline étant placée sur le bus de transfert pour introduire le retard sur les données nécessaire au fonctionnement du traducteur.

L'invention sera mieux comprise et d'autres caractéristiques apparaîtront à l'aide de la description qui suit en référence aux figures annexées.
- La figure 1 est un schéma fonctionnel du commutateur selon l'invention ;
- La figure 2 illustre la constitution des cellules transmises ;
- La figure 3 illustre le transfert sur bus unique multiplexé selon l'invention.

Pour résoudre le problème mentionné ci-dessus le commutateur de paquets pour un transfert de données en mode asynchrone, à traduction centralisée par selon l'invention est structuré autour d'un bus de transfert de données unique, absorbant la totalité du débit, et à vitesse modérée.

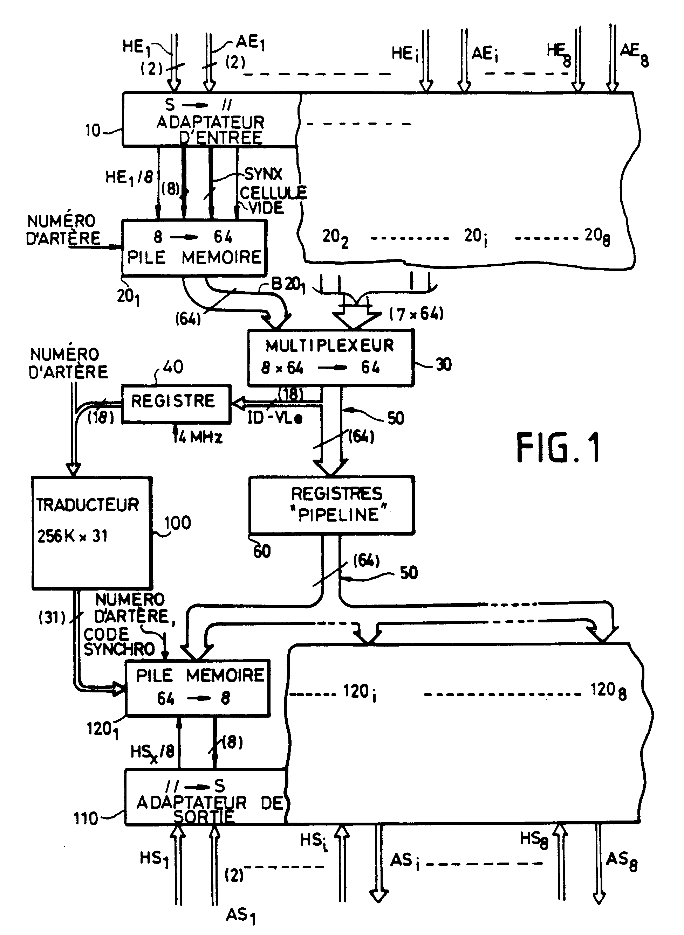

La figure 1 représente le commutateur selon l'invention destiné à connecter des artères entrantes AEᵢ, i = 1 à 8 par exemple, à des artères sortantes ASᵢ, i = 1 à 8, chacune associée à son horloge HEᵢ ou HSᵢ. Les artères entrantes dans le commutateur, susceptibles de transmettre des données à débit élevé 150 Mbits/s au maximum, sont reliées à un circuit adaptateur d'entrée 10 réalisé en technologie rapide, parallélisant les données séries entrantes pour les transmettre sous forme d'octets en parallèle. Ce circuit prédiffusé effectue également la détection des codes de synchronisation et fournit à partir de l'horloge externe HEᵢ associée à une artère de transmission une horloge correspondante pour la sortie des octets HEᵢ/8. Enfin ce circuit d'entrée 10 fournit également un bit indicateur de "cellule vide" lorsqu'aucune donnée n'est transmise.

La vitesse est ainsi réduite, et le niveau logique suivant peut être réalisé en technologie à vitesse modérée. Les données parallèles issues du circuit adaptateur d'entrée 10 sont donc transmises à des circuits comportant des piles mémoires, respectivement associés aux différentes artères, 20₁, ... 20ᵢ... 20_{N}, N étant le nombre d'artères entrantes recevant le numéro de l'artère entrante correspondante. Pour conserver cette vitesse modérée sur le bus unique de transfert, 50, les données sont extraites des piles mémoires 20ᵢ par paquets de largeur plus grande, soit 8M, par exemple 64 bits. Pour le transfert sur le bus unique 50, les sorties sur 64 bits de chacune des piles mémoires 20ᵢ sont donc reliées aux entrées d'un multiplexeur temporel 30 qui transfère successivement les données issues des différentes mémoires 20ᵢ sur le bus unique de transfert.

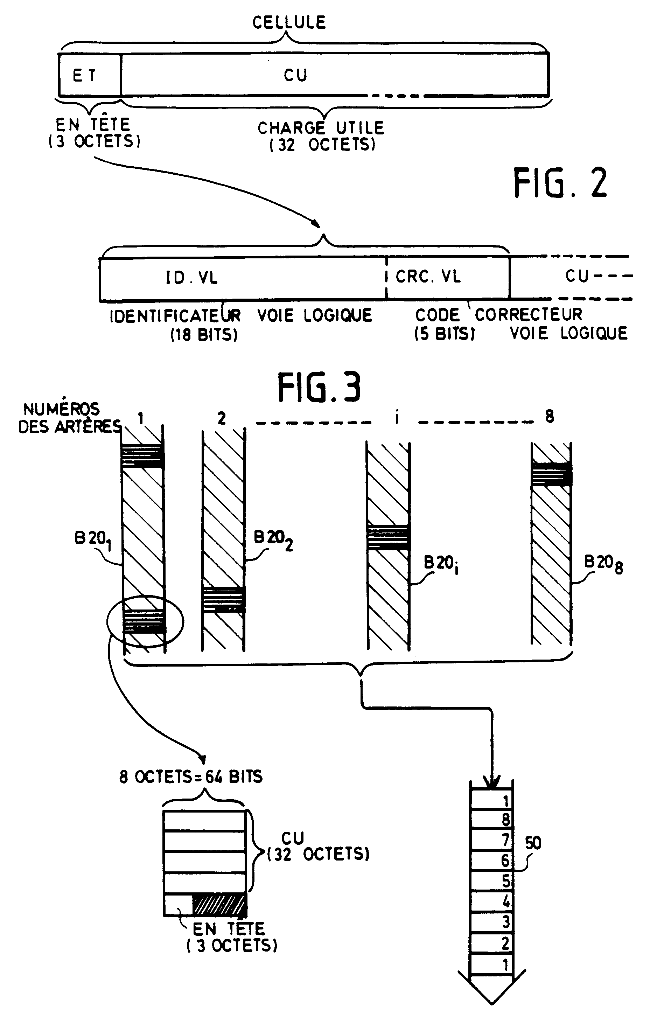

Pour comprendre comment est effectué le transfert sur le bus unique via le multiplexeur, la structure des cellules de données est montrée sur la figure 2. Chaque cellule, qui comporte un nombre entier prédéterminé d'octets, est formée d'un en-tête comportant notamment l'identificateur de voie logique, et d'une charge utile qui comporte les données à transmettre. La longueur de l'en-tête pourra être comprise entre 3 et 8 octets tandis que la longueur de la charge utile pourra être comprise entre 32 et 120 octets par exemple. Mais une fois les caractéristiques du réseau fixées, ces nombres sont les mêmes en tous points du réseau. Sur la figure 2 on a montré un en-tête de 3 octets, et une charge utile de 32 octets. L'en-tête est constitué du code identificateur de la voie logique et d'un code correcteur de voie logique, respectivement ID.VL, et CRC. VL. En conséquence, une cellule dans cette configuration comporte 35 octets.

Si l'on revient à la figure 1, les données étant transférées par paquets de 64 bits sur le bus unique de transfert, une cellule sera mémorisée dans la pile mémoire d'entrée 20ᵢ dans une zone mémoire comportant cinq fois 8 octets soit 40 octets, 5 octets vides suivis de 3 octets d'en-tête dans la première zone de 64 bits, puis les 32 octets répartis en 4 la groupes de 8 octets dans les zones mémoires de 64 bits. Une cellule sera donc transférée sur le bus unique par 5 impulsions d'horloge consécutives à 20 MHz par exemple, avant que le multiplexeur temporel commute sur une autre pile mémoire, 20ᵢ₊₁. En plus de la fonction mémoire, les circuits 20ᵢ, réalisent la fonction de contrôle des codes correcteurs de voie logique CRC.VLₑ et effectuent un forçage à zéro en cas d'erreur. La gestion de ces mémoires d'entrée est également effectuée dans ces circuits, avec élimination des cellules vides (par paquets de 64 bits) et le transfert sur le bus unique de sortie, avec bourrage à zéro pour les cellules vides, c'est-à-dire correspondant à un indicateur de cellule vide à 1.

Ce transfert est illustré par la figure 3 qui montre les bus B20ᵢ de sortie des piles mémoires 20ᵢ et les paquets de données transférés correspondants, et leur succession sur le bus unique 50.

La traduction centralisée est effectuée à ce niveau. Pour cela les bits de l'en-tête constituant l'identificateur de voie logique entrante, ID.VLₑ, soit 18 bits dans la configuration représentée sur la figure 2, sont transmis à un registre 40 commandé par une horloge à la fréquence 20/5 MHz, soit 4 MHz. Ces bits sont transférés à un traducteur 10 qui reçoit également, du micro-contrôleur ou du bus informatique destiné à la commande du commutateur (non représentés), le numéro de l'artère entrante à l'instant considéré. A partir de ces données, le traducteur qui est en fait une table mémoire de capacité 31x2 Mbits fournit, à partir de l'identificateur de voie logique entrante, l'identificateur de voie logique sortante, ID.VLₛ sur 18 bits, le code correcteur associé, CRC.VLₛ sur 5 bits, et l'indicateur de sélection d'artère, un bit actif sur les 8 respectivement associés aux 8 artères sortantes, ou plusieurs bits actifs en cas de diffusion sur plusieurs artères sortantes. Ces 31 bits sont transmis à des circuits comportant des piles mémoires de sortie, 120₁ ... 120ᵢ ... 120₈, en même temps qu'est relié aux entrées de données de ces mémoires le bus unique 50, via une pile de registres "pipeline" 60 qui permet d'absorber le retard introduit par le traducteur. Le numéro de l'artère de sortie et le code de synchronisation correspondant sont également appliqués à ces piles mémoires de sortie 120ᵢ qui reçoivent donc les données destinées à être transmises sur l'artère qui leur est associée. Ces données reçues par paquets de 64 bits, au rythme de 20 MHz, sont restituées sous forme d'octets à 20 MHz sur l'artère correspondante. Les circuits à mémoire de sortie, 120ᵢ, disposent donc des fonctions suivantes, également câblées, en plus de leur fonction mémoire :
- reconnaissance de l'instruction de marquage par l'indicateur de sélection d'artère(s) sur 8 bits ;
- insertion des identificateurs de voies logiques sortantes ID.VLₛ et des codes correcteurs associés CRC.VLₛ, dans les cellules à la place des identificateurs, et codes correcteurs associés, des voies logiques entrantes ;
- gestion des zones mémoires de sortie ;
- insertion éventuelle des cellules vides ;
- transformation des paquets 64 bits en suite d'octets.

Ces octets sont alors transmis à un circuit adaptateur de sortie 110 qui effectue la transformation parallèle 8 bits/série, et transmet donc les données série au rythme de 150 MHz maximum sur l'artère de sortie correspondante. A cet effet l'adaptateur de sortie reçoit les horloges externes HSᵢ des artères sortantes pour la sortie des bits série, et fournit à partir de ces horloges, les horloges correspondantes pour la sortie des octets HSᵢ/8 aux circuits à mémoire de sortie, 120ᵢ.

La description fonctionnelle faite ci-dessus permet d'introduire la description matérielle qui lui est liée :

Les circuits adaptateurs d'entrée et de sortie, 10 et 110, peuvent être réalisés sur un circuit prédiffusé unique en technologie rapide, c'est-à-dire en technologie ECL 100K ou en technologle BICMOS, qui sont susceptibles de travailler à des débits compatibles avec cette application, c'est-à-dire jusqu'à 150 MHz maximum. Les circuits à piles mémoires d'entrée et de sortie peuvent être réalisées en technologie à vitesse modérée par exemple en technologie CMOS 20 MHz par exemple avec des boîtiers de 90 broches pour les circuits à piles mémoires d'entrée et de 120 broches (ou 2 boîtiers 75 broches) pour les circuits à piles mémoires de sortie.

La description indiquée ci-dessus a été donnée pour 8 artères d'entrée et 8 artères de sortie, mais un avantage de cet structure est qu'elle peut être adaptée sans changement d'architecture et avec une adaptation optimale (structure homothétique) à des commutateurs de taille plus petite par exemple pour 4 artères entrantes et 4 artères sortantes. La taille du traducteur pourra alors être limitée à 256 K x 31 puisque l'identificateur de voie logique peut être réduit à 15 éléments binaires. Le nombre de piles mémoires est évidemment adapté au nombre d'artères soit 4 pour les piles mémoires d'entrée et 4 pour les piles mémoires de sortie, le multiplexeur effectuant alors un multiplexage de 4 fois 64 bits à 64 bits. L'architecture permet donc de dépeupler facilement en enlevant des artères ; conçue pour 8 artères elle s'adapte sans problème à 4. Comme indiqué ci-dessus, cette structure permet également la diffusion : plusieurs voies sortantes appartenant à des artères différentes de sortie (au plus 1 par artère) peuvent recevoir la même voie entrante. Sa modularité est également un avantage pour minimiser les coûts en adaptant exactement la technologie utilisée pour chaque module à ce qui est nécessaire.

Bien entendu l'invention n'est pas limitée au mode de réalisation précisément décrit. Il est clair que pour un transfert de données en mode asynchrone utilisant des cellules plus longues, le multiplexage des voies correspondant devrait être adapté à la taille des cellules. De même, le transfert en mode asynchrone utilise des cellules constituées d'un nombre entier prédéterminé d'octets. C'est pourquoi le circuit adaptateur d'entrée (et réciproquement en sortie) parallélise les données en octets. Mais la parallélisation pourrait être faite différemment par exemple série/paquets de 16 bits, si pour des raisons technologiques cette forme est mieux adaptée.

## Revendications

1. Commutateur de paquets pour un transfert de données en mode asynchrone dans un réseau de transmission numérique, destiné à interconnecter des voies appartenant à N artères entrantes dans le commutateur à des voies appartenant à N artères sortantes du commutateur, caractérisé en ce qu'il est structuré autour d'un bus de transfert de données multiplexées unique (50) absorbant la totalité du débit, et comporte :
d'une part en amont du bus de transfert (50) :
- un circuit adaptateur d'entrée (10) réalisé en technologie rapide relié aux artères entrantes, qui transforme les données série des artères entrantes en données parallélisées en paquets de n bits,
- N piles mémoire à décalage d'entrée (20ᵢ, i = 1 à N) associées aux artères d'entrée réalisées en technologie à vitesse modérée et dont les entrées parallèles sont reliées aux sorties correspondantes du circuit adaptateur d'entrée et dont les sorties transfèrent les données mémorisées par paquets de nM bits sur le bus unique à nM bits (50) via un circuit multiplexeur (30) ;
et en aval du bus (50) :
- N piles mémoires à décalage (120ᵢ, i = 1 à N) réalisées en technologie à vitesse modérée reliées au bus (50) ayant chacune une sortie parallèle sur n bits,
- et un circuit adaptateur de sortie (110) réalisé en technologie rapide, relié aux sorties des piles mémoires et transférant les données sérialisées sur les artères sortantes.
et d'autre part :
en ce qu'il comporte un traducteur (100) effectuant une traduction centralisée à commande par l'amont couplé à la sortie du multiplexeur (30) sur le bus de transfert pour prélever les bits associés aux identificateurs de voies logiques entrantes et les traduire en identificateurs de voies logiques sortantes, la sortie correspondante du traducteur étant également reliée aux entrées des N piles mémoires de sortie, une mémoire pipeline (60) étant placée sur le bus de transfert pour introduire le retard sur les données nécessaire au fonctionnement du traducteur.

2. Commutateur selon la revendication 1, caractérisé en ce que l'adaptateur d'entrée (10) et l'adaptateur de sortie (110) sont réalisés dans un circuit intégré en technologie rapide, ECL 100K ou BICMOS.

3. Commutateur selon la revendication 2 caractérisé en ce que les piles mémoires à décalage d'entrée et de sortie (20ᵢ et 120ᵢ) sont réalisées dans des circuits intégrés prédiffusés, en technologie à vitesse modérée type CMOS 20 MHZ.

4. Commutateur selon la revendication 1 où le nombre N d'artères, entrantes ou sortantes, est égal à 8.

5. Commutateur selon la revendication 1, caractérisé en ce que les données série sont parallélisées en octets n = 8, dans l'adaptateur d'entrée, puis transférées en paquets de 64 bits (M = 8) le bus unique de transfert des données étant un bus de 64 bits.

## Claims

1. Packet switch for data transfer in asynchronous mode in a digital transmission network, intended to interconnect channels belonging to N highways coming into the switch to channels belonging to N highways going out of the switch, characterized in that it is structured around a single, multiplexed data, transfer bus (50) absorbing the whole of the throughput, and includes:
on the one hand, upstream from the transfer bus (50):
- an input adapter circuit (10) produced in high-speed technology, linked to the incoming highways, which converts the serial data of the incoming highways into parallel data in packets of n bits,
- N input shift memory stacks (20ᵢ, i = 1 to N), associated with the input highways produced in medium-speed technology and whose parallel inputs are linked to the corresponding outputs of the input adapter circuit, and whose outputs transfer the data stored in memory by packets of nM bits onto the single nM-bit bus (50) via a multiplexer circuit (30);
- and, downstream from the bus (50):
- N shift memory stacks (120ᵢ, i = 1 to N), produced in medium-speed technology, linked to the bus (50) each having a parallel output on n bits,
- and an output adapter circuit (110) produced in high-speed technology, linked to the outputs of the memory stacks and transferring the serialized data onto the outgoing highways,
- and, on the other hand:
in that it includes a translator (100), carrying out a centralized translation with control from upstream, coupled at the output of the multiplexer (30) onto the transfer bus in order to pick up the bits associated with the incoming logic channel identifiers and translate them into outgoing logic channel identifiers, the corresponding output of the translator also being linked to the inputs of the N output memory stacks, a pipeline memory (60) being placed on the transfer bus to introduce the delay on the data which is necessary for the operation of the translator.

2. Switch according to Claim 1, characterized in that the input adapter (10) and the output adapter (110) are produced in an integrated circuit in high-speed, ECL 100K or BICMOS technology.

3. Switch according to Claim 2, characterized in that the input and output shift memory stacks (20ᵢ and 120ᵢ) are produced in prediffused integrated circuits, in medium- speed, CMOS 20 MHz type technology.

4. Switch according to Claim 1, in which the number N of incoming or outgoing highways is equal to 8.

5. Switch according to Claim 1, characterized in that the serial data are put in parallel in bytes, n = 8, in the input adapter, then transferred in packets of 64 bits (M = 8), the single data transfer bus being a 64-bit bus.

## Patentansprüche

1. Paketvermittlungseinrichtung zur asynchronen Datenübertragung in einem digitalen Übertragungsnetz, die dazu bestimmt ist, Kanäle, die N Eingangshauptleitungen der Vermittlungseinrichtung zugeordnet sind, mit Kanälen zu verbinden, die N Ausgangshauptleitungen der Vermittlungseinrichtung zugeordnet sind, dadurch gekennzeichnet, daß sie um einen einzigen Multiplexdatenübertragungsbus (50) herum aufgebaut ist, der die gesamte Belastung aufnimmt, und folgendes enthält:
einerseits vor dem Übertragungsbus (50):
- eine in schneller Technik verwirklichte, mit den Eingangshauptleitungen verbundene Eingangsanpassungsschaltung (10), die die Seriendaten der Eingangshauptleitungen in Daten umwandelt, die in Paketen von n Bits parallel angeordnet sind,
- N Eingangsschiebestapelspeicher (20ᵢ, i = 1 bis N), die den Eingangshauptleitungen zugeordnet und in einer Technologie geringer Geschwindigkeit verwirklicht sind, und deren parallele Eingänge mit den entsprechenden Ausgängen der Eingangsanpassungsschaltung verbunden sind, und deren Ausgänge die in Form von Paketen von nM Bits gespeicherten Daten über eine Multiplexerschaltung (30) auf den einzigen nM Bits-Bus (50) übertragen;
und hinter dem Bus (50):
- N Schiebestapelspeicher (120ᵢ, i = 1 bis N), die in einer Technologie geringer Geschwindigkeit verwirklicht, mit dem Bus (50) verbunden und jeweils einen über n Bits parallelen Ausgang besitzen,
- und eine Ausgangsanpassungsschaltung (110), die in einer schnellen Technologie verwirklicht und mit den Ausgängen der Stapelspeicher verbunden ist sowie die in eine serielle Form gebrachten Daten auf die Ausgangshauptleitungen überträgt;
und andererseits:
daß sie einen Umsetzer (100) enthält, der eine von vorn gesteuerte zentralisierte Umsetzung bewirkt und mit dem Ausgang des Multiplexers (30) auf dem Übertragungsbus gekoppelt ist, um die den Identifizierern von logischen Eingangskanälen zugeordneten Bits zu entnehmen und sie in Identifizierer von logischen Ausgangskanälen umzusetzen, wobei der entsprechende Ausgang des Umsetzers ebenfalls mit den Eingängen der N Ausgangsstapelspeicher verbunden ist und ein Pipeline-Speicher (60) auf dem Übertragungsbus angeordnet ist, um die Daten so zu verzögern, wie dies für den Betrieb des Umsetzers erforderlich ist.

2. Vermittlungseinrichtung nach Anspruch 1, dadurch gekennzeichnet, daß die Eingangsanpassungseinrichtung (10) und die Ausgangsanpassungseinrichtung (110) in einer schnellen integrierten Schaltungstechnik, ECL 100K oder BICMOS, verwirklicht sind.

3. Vermittlungseinrichtung nach Anspruch 2, dadurch gekennzeichnet, daß die Eingangs- und Ausgangsschiebestapelspeicher (20ᵢ und 120ᵢ) in vordiffundierten integrierten Schaltungen in einer Technologie geringer Geschwindigkeit entsprechend dem Typ CMOS 20 MHZ verwirklicht sind.

4. Vermittlungseinrichtung nach Anspruch 1, bei der die Anzahl N von Eingangs- oder Ausgangshauptleitungen gleich 8 ist.

5. Vermittlungseinrichtung nach Anspruch 1, dadurch gekennzeichnet, daß die Seriendaten in der Eingangsanpassungseinrichtung in paralleler Form in Oktetten, n = 8, dargestellt und dann in Paketen von 64 Bits (M = 8) übertragen werden, wobei der einzige Übertragungsbus für die Daten ein Bus von 64 Bits ist.
